# EUROPEAN PATENT SPECIFICATION

(11) **EP 4 116 021 B1**
(45) Date of publication and mention of the grant of the patent: **18.06.2025**
(21) Application number: 22182746.2
(22) Date of filing: 04.07.2022
(51) Int. Cl.: B23D 59/00, B28D 7/02, B27G 19/02

(54) **MACHINE TOOL PERFORMING AT LEAST ONE REMOVAL MATERIAL OPERATION ON A PANEL OR OTHER WORKPIECE, PROVIDED WITH A SYSTEM FOR DEFLECTING THE FLOW OF THE CHIPS**
WERKZEUGMASCHINE, DIE MINDESTENS EINEN MATERIALABTRAG AN EINER PLATTE ODER EINEM ANDEREN WERKSTÜCK DURCHFÜHRT, VERFÜGT MIT EINEM SYSTEM ZUR UMLENKUNG DES SPÄNEFLUSSES
MACHINE-OUTIL EFFECTUANT AU MOINS UNE OPÉRATION D'ÉLIMINATION DE MATIÈRE SUR UN PANNEAU OU AUTRE PIÈCE, MUNIE D'UN SYSTÈME DE DÉVIATION DU COURANT DE COPEAUX

(30) Priority: 06.07.2021 IT 202100017816
(43) Date of publication of application: 11.01.2023
(73) Proprietor: SCM Group S.p.A., 47921 Rimini (RN) (IT)
(72) Inventor: FERRI, Mirko, 47921 RIMINI (IT)
(74) Representative: Tiburzi, Andrea

(56) References cited:
- EP-A1- 2 377 636
- EP-A1- 2 571 664
- EP-A2- 1 066 916
- JP-A- 2010 214 536
- JP-A- 2017 007 314
- US-A1- 2005 232 717
- US-A1- 2010 043 768

## Description

The present invention relates to a machine tool performing at least one removal material operation on a panel or other workpiece, provided with a perfected system for deflecting the flow of the chip-removal material.

Specifically, the invention proposed here relates to a machine tool for cutting or making grooves in a workpiece made of wood, plastic, ceramic, glass, fiberglass, or metal, by means of a rotary type operating member.

More in detail, the invention relates to a machine tool equipped with an operating head comprising a spindle that can be removably connected, by means of an HSK cone, to an interchangeable tool, and can be rotated from the spindle itself in order to carry out work by removing waste material on workpieces made of wood, plastic, ceramic, glass, fiberglass or metal.

This machine tool is designed and manufactured in particular to perform processes such as cutting and making grooves on a workpiece to be worked made of wood, plastic, ceramic, glass, fiberglass, or metal, but it can also be used for other types of machining.

In the following, the description will be addressed to a machine tool for cutting or making grooves in a piece to be worked in wood, plastic, ceramic, glass, fiberglass, or metal, but it is clear that it should not be considered limited to this specific use.

Currently, there are machine tools equipped with operating heads comprising a circular blade, peripherally provided with a plurality of cutting edges.

Said circular blade can be operated in rotation to cut or make grooves in, a piece to be worked made of wood, plastic, ceramic, glass, fiberglass or metal, such as for example a wooden panel.

Said blade, when activated and in contact with the panel to be worked, removes waste material from the panel itself, pushing it with considerable speed in a direction substantially parallel to the panel to be worked, according to the rotation direction of the blade.

Machine tools are also known, which comprise operating heads of the aforesaid type provided with a deflecting element adapted to deflect upwards the flow of the waste material produced by the work in progress.

In particular, deflecting elements are known, which are radially coupled to the center of the blade by means of a radial support arm, free to rotate around the center of said blade, along the outer circumference of the latter.

These deflecting elements are free to rotate between two end positions determined by respective end-of-stroke members, which can be manually adjusted by an operator.

These latter deflecting elements, therefore, rotate around the center of said blade only by gravity and by inertia, arranging themselves on the panel to be worked, only pushed by their own weight force.

An obvious problem with operating heads provided with deflecting elements of this type is that it is not possible to know the position of said deflecting elements at all times.

In fact, the deflecting elements of the above type can freely move between their respective end-of-stroke positions, subject only to the force of gravity and the force of inertia due to the movements of the operating head itself.

This implies that there is no rest position of said deflecting elements, predetermined and known in inactivity conditions of the blade or when the latter does not operate on the panel.

Machine tools are also known with operating heads provided with deflecting elements radially coupled to the center of the blade, by means of a radial support arm, whose position with respect to said blade is controllable, and therefore known, by means of electric or pneumatic actuators.

An obvious problem of this technical solution is given by the additional energy expenditure due to the use of actuators, these being controlled by electric or pneumatic drives.

A further problem of the technical solution in question is the increase in the complexity degree in the number of components of the operating head.

Document EP 1 066 916 A2 discloses a machine tool comprising an operative head and operative means which are connectable with said operative head and configured to perform at least one chip-removal machining operation on a panel, wherein said operative means are relatively movable with respect to said panel or other workpiece and comprise a rotative tool to perform at least one chip-removal machining operation on said panel or other workpiece; and at least one deflecting element for deflecting the chip material generated by said tool during at least one chip-removal machining operation executed on said panel or other workpiece, said at least one deflecting element being connected with said tool and configured to take a resting position, when said tool is placed, in use, at a distance larger than a predetermined distance with respect to said panel or other workpiece, and an operative position, where said at least one deflecting element receives and deflects said chip material when said tool operates on said panel or other workpiece; wherein said operative means comprise elastic means which are configured to keep said at least one deflecting element, in said operative position, in forced contact with said panel or other workpiece when said tool operates on said panel or other workpiece.

The relevant prior art also includes patent application JP 2010214536 A.

In light of the above, it is, therefore, an object of the present invention to provide a machine tool to perform at least one machining by removing material on a panel or other workpiece, equipped with an operating head for machining a panel to be machined made of wood, plastic, ceramic, glass, fiberglass or metal, through one or more material removal workings, in which the same operating head includes a deflecting element of the processing waste material, whose position is predetermined and known at any time, or is in operating and resting conditions.

Another object of the invention is to provide a machine tool for performing at least one machining by removing material on a panel or other workpiece, equipped with an improved system for diverting the flow of waste material, which system is simple from the constructive point of view, and requires a limited energy supply for its operation.

It is, therefore, specific object of the present invention a machine tool comprising an operative head and operative means which are connectable with said operative head and configured to perform at least one chip-removal machining operation on a panel or other workpiece, wherein said operative means are relatively movable with respect to said panel or other workpiece and comprise: a rotative tool to perform at least one chip-removal machining operation on said panel or other workpiece; and at least one deflecting element for deflecting the chip material generated by said tool during at least one chip-removal machining operation executed on said panel or other workpiece, said at least one deflecting element being connected with said tool and configured to take a resting position, when said tool is placed, in use, at a distance larger than a predetermined distance with respect to said panel or other workpiece, and an operative position, where said at least one deflecting element receives and deflects said chip material when said tool operates on said panel or other workpiece; characterized in that said operative means comprise elastic means which are configured to keep said at least one deflecting element, in said resting position, stationary with respect to said tool when said tool is placed at a distance larger than a predetermined distance with respect to said panel or other workpiece, and to keep said at least one deflecting element, in said operative position, in forced contact with said panel or other workpiece when said tool operates on said panel or other workpiece.

Conveniently according to the invention, said operative head may comprise a spindle, with which said operative means are connectable in a removable way.

Further according to the invention, said tool comprises a circular cutting blade.

Advantageously according to the invention, said at least one deflecting element may comprise a tooth which projects, in use, towards said panel or other workpiece and has a thickness which is substantially equal to the thickness of said tool, such that said tooth is configured to be placed, in use, in a groove which is realized by said tool in said panel or other workpiece during said at least one chip-removal machining operation.

Still according to the invention, said operative means may comprise connecting means for connecting said at least one deflecting element with said tool such that said at least one deflecting element is movable according to a curved trajectory with respect to said tool.

Preferably according to the invention, said connecting means may comprise an articulated quadrilateral system, particularly an articulated parallelogram system.

Further according to the invention, said elastic means may be connected with said articulated quadrilateral system.

Conveniently according to the invention, said elastic means may comprise at least one extension spring.

Advantageously according to the invention, said operative means may comprise at least one stop element which is configured such as to determine said resting position of said at least one deflecting element.

Preferably according to the invention, said at least one stop element may be adjustable such as to allow modifying the resting position of said at least one deflecting element.

Further according to the invention, said connecting means may comprise a first articulated rod and a second articulated rod and in that said at least one stop element is coupled to said first articulated rod by a thread and faced to said second articulated rod.

Preferably according to the invention, said operative means may comprise at least one smoothed element placed between said tool and said at least one deflecting element such that said at least one smoothed element goes, in use, into contact with said panel or other workpiece before said at least one deflecting element goes into contact with said panel or other workpiece when a relative movement between said operative means and said panel or other workpiece according to a direction is performed to execute a chip-removal machining operation on said panel or other workpiece.

Further according to the invention, said at least one deflecting element may comprise at least a first portion and at least a second portion which are such oriented as to form therebetween a predetermined angle and deflect, in use, respectively according to a first direction and a second direction different from said first direction, a chip material flow generated by said tool during at least one chip-removal machining operation executed on said panel or other workpiece.

Conveniently according to the invention, said machine may comprise at least one sensor which is configured to detect a contact between said deflecting element and said panel or other workp+iece when said deflecting element is in said operative position.

The present invention will be now described, for illustrative but not limitative purposes, according to its preferred embodiments, with particular reference to the figures of the enclosed drawings, wherein:
figure 1 shows a side view of the operating head of a machine tool according to the invention, and of a panel being machined by means of said operating head;
figure 2 shows an axonometric view of the operating head shown in figure 1;

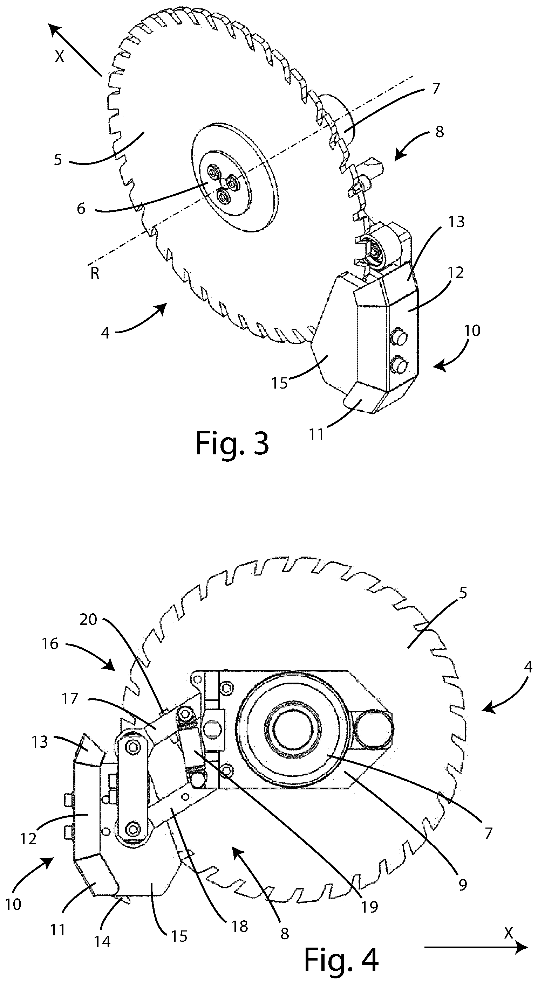

figure 3 is a first axonometric view of the assembly consisting of a blade and a deflector system, for diverting the flow of waste material, of the operating head shown in figures 1 and 2;
figure 4 shows a side view of the assembly illustrated in figure 3;

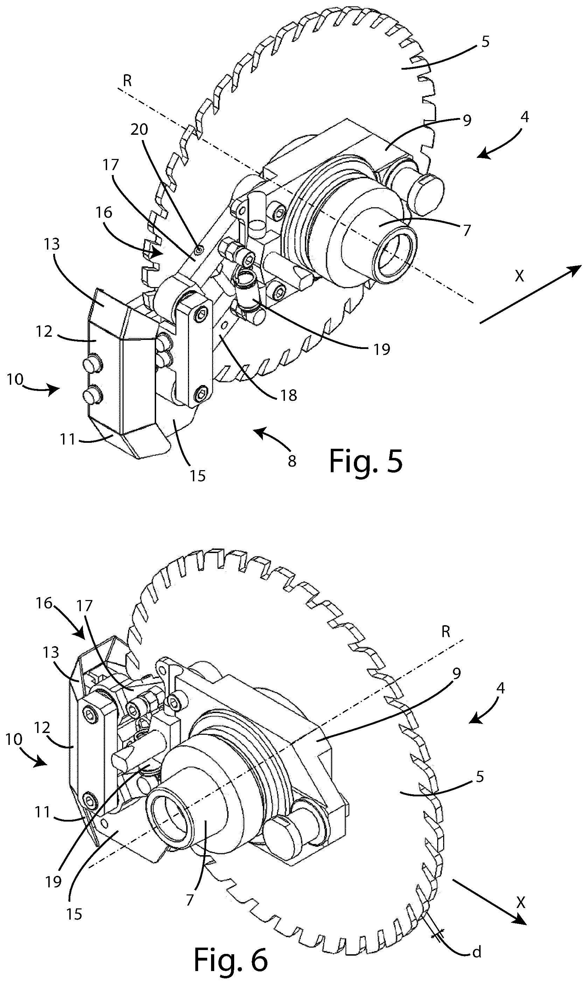

figure 5 is a second axonometric view of the assembly shown in figures 3 and 4; and
figure 6 is a third axonometric view of the assembly represented in figures 3, 4, and 5.

In the various figures the similar parts will be indicated with the same numerical references.

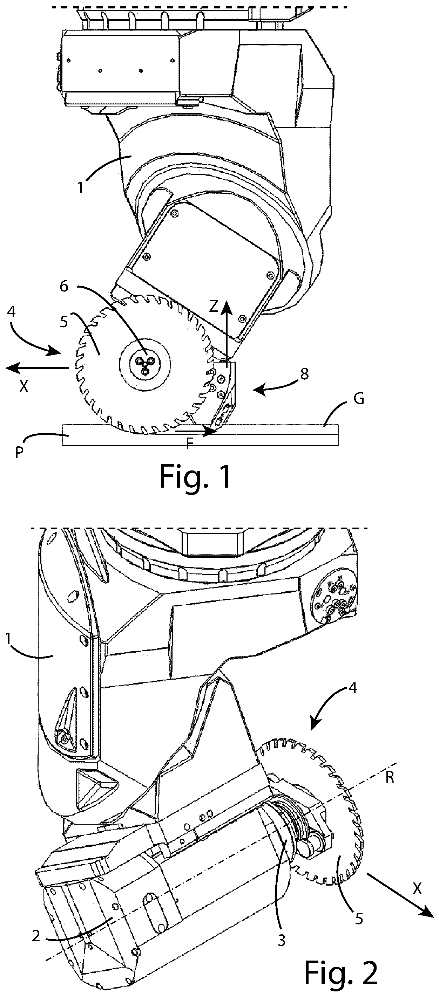

With reference to figures 1 and 2, 1 indicates an operating head of a machine tool (not shown) according to the present invention.

Said operating head 1 allows one or more workings to be carried out by removing material on a panel P or another workpiece to be worked and is movable with respect to said panel P or another workpiece.

In the particular embodiment shown in figures 1 and 2, this operating head 1 is an operating head with five axes, that is, with five degrees of freedom.

The operating head 1 comprises a movable terminal element 2 and a spindle 3 rotatably mounted on this terminal element 2 around a rotation axis R.

To the spindle 3 an operating unit 4 can be removably coupled, comprising a tool suitable for carrying out at least one machining by removing material on a panel P or other workpiece.

In the particular embodiment of the invention illustrated in the accompanying figures, this tool is a circular cutting blade 5 lying on a plane substantially perpendicular to the rotation axis R of the spindle 3, and also rotatable with respect to said rotation axis R.

Specifically, this operating unit 4 also comprises a hub 6, which the cutting blade 5 is rigidly mounted on.

The hub 6 is, in turn, equipped with a connection member 7, such as for example a HSK cone, axially arranged to allow its removable coupling with the spindle 3.

The spindle 3 is connected to motor means (not shown) to allow the rotation of the same, and of the cutting blade 5 around the rotation axis R, when the latter is coupled to the spindle 3 itself.

The cutting blade 5 is therefore capable of being rotated by said spindle 3, to carry out the work by removing material on said panel P along a cutting direction X, attacking said panel P from above in order to avoid possible chipping.

The operating unit 4 also comprises a deflecting system 8 for diverting the flow F of powders generated by the cutting blade 5 during the cutting operations performed by the same on the panel P or other workpiece.

The deflecting system 8 includes a connection element 9, in which a through opening is formed through the hub 6 of the cutting blade 5, and sized in such a way that the hub 6 can freely rotate inside it.

The connection element 9 is in turn rigidly and removably connectable, by means of removable connection means (not shown), to the aforementioned terminal element 2 of the operating head 1, when the operating unit 4 is coupled to the spindle 3.

The deflecting system 8 also comprises a deflecting element 10, which in the present case consists of a curved sheet having a substantially U-shaped cross-section.

Said deflecting element 10 is arranged in proximity to a peripheral portion of the cutting blade 5, aligned with it, to divert upwards the flow F of the powder of the waste material removed from the panel P by the cutting blade 5.

Specifically, the deflecting element 10 is shaped and positioned in such a way as to deflect the powders flow F generated by the cutting blade 5 towards a suction apparatus (not shown) placed above the operating unit 4.

The deflecting element 10 comprises a lower end portion 11 inclined in such a way as to receive and divert, in a first direction, the flow F of the waste material produced during the cutting operation of the cutting blade 5 on the panel P or other workpiece.

The deflecting element 10 further includes a central portion 12 fixed above the lower end portion 11, so as to form a predetermined angle with respect to the latter.

The same deflecting element 10 also comprises an upper terminal portion 13, fixed above the central portion 12, in such a way as to form a certain angle with respect to the latter, thus allowing the flow F of powder to be diverted in a substantially vertical direction Z.

The deflecting element 10 also comprises a tooth 14, which protrudes from the lower end portion 11.

The tooth 14 substantially has the same thickness d as the cutting blade 5, being able in this way to move inside the furrow portion, already made on the panel P or other piece by the cutting blade 5 while the lower end portion 11 moves together with it, remaining adherent to the upper face of said panel P or other piece.

The particular shape of the deflecting element 10, composed of the aforementioned lower terminal portion 11, central portion 12, and upper terminal portion 13, allows the powder flow F generated by the cutting blade 5 to be progressively deviated from a direction substantially parallel and opposite to the cutting direction X, to the aforementioned substantially vertical direction Z, thus preventing the waste material from bouncing off the deflecting element 10.

The deflecting system 8 further comprises a smoothed element 15, rigidly connected to said deflecting element 10, and arranged in such a position as to come into contact with the panel P when the operating unit 4 approaches it according to a direction parallel to the cutting direction X, thus avoiding that the panel P can be damaged by the deflecting system 8.

Said deflecting system 8 further comprises a connection system 16, and connects the deflecting element 10 to the connection element 9.

In particular, this connection system 16 comprises a first rod 15, a second rod 18 of equal length, a return spring 18 and an adjustable stop 20.

Each of said first 17 and second 18 rod is rotatably coupled to said connecting element 9 and to said deflecting element 10, according to respective rotation axes, parallel to said rotation axis R.

Said first 17 and second 18 rods are parallel to each other, and free to rotate around the aforementioned rotation axes.

In this way, said connecting element 9, deflecting element 10, first rod 17, and second rod 18 form an articulated parallelogram.

The deflecting element 10 is therefore capable of moving on a plane orthogonal to said rotation axis R, according to a curvilinear trajectory defined by the rotation of said first 16 and second 17 rod.

The return spring 19 is rotatably mounted between the first 17 and the second 18 rod, in such a way as to perform a return function, for the latter, towards a lowered rest configuration of the connection system 16.

In the case at issue shown in the accompanying figures, this return spring 19 is a traction spring.

Said adjustable stop 20 is formed by a pin coupled, by means of a thread, to the first rod 17 and directed towards the second rod 18.

The position of the adjustable stop 19 is therefore adjustable, in extension and retraction, by means of screwing or unscrewing maneuvers applied on its.

In the rest configuration of the articulated parallelogram, the aforementioned adjustable stop 20 abuts the second rod 18, due to the return action performed by the return spring 19, preventing the deflecting system 8 from moving with respect to the cutting blade 5 in absence of additional external forces applied to it.

In the absence of external forces, therefore, the return spring 19 maintains said articulated parallelogram in said rest position, regardless of the position assumed by the operating head 1 in space.

The aforementioned machine tool can also comprise at least one sensor for detecting whether the deflecting element 10 is in contact with the panel P when the cutting blade 5 performs the machining envisaged on the panel P itself, thus allowing to establish whether the return spring 19 operates correctly, or it is broken.

In particular, said at least one sensor can be arranged on the deflecting element 10 or on the operating head 1, and can comprise, for example, a load cell provided on the deflecting element 10, an optical or acoustic sensor for measuring the distance between the deflecting element 10 and panel P, and/or a capacitive sensor.

The operation of the machine tool with a rotary cutting member, object of the present invention described above, is as follows.

When it is intended to perform a machining, such as sectioning or making grooves, on a panel to be machined made of wood, plastic, ceramic, glass, fiberglass or metal, said panel P is secured to the machine tool object of the present invention.

Said spindle 3 then rotates said cutting blade 5 and performs the movements necessary to execute the predetermined cutting patterns.

In particular, when it is desired to perform a cut on said panel P, the operating head 1 is approached to the latter, and then moved according to the cutting direction X, in such a way as to allow the cutting blade 5 to progressively making a groove G on the surface of the panel P facing said cutting blade 5.

The deflecting system 8 remains in the relative rest position as long as it does not come into contact with the panel P, regardless of the orientation of the operating head 1, causing the position of the deflecting element 10 is known at any moment before the aforementioned contact occurs.

In particular, the deflecting system 8 remains in the relative rest position until said cutting blade 5 approaches the panel P below a predetermined distance with the panel P itself.

When the deflecting system 8 comes into contact with the panel P due to the effect of the relative movement of the operating head 1, the same panel P will exert a force on the same deflecting system 8 in opposition to the return force of the return spring 19, causing in this way the lifting of the deflecting system 8 with respect to the cutting blade 5 towards a determined operating position.

During the execution of the groove G on the panel P by the cutting blade 5 moving according to the cutting direction X, the lower end portion 11 of the deflecting element 10 is constantly pushed, thanks to the elastic action of the return spring 19, against the upper face of the panel P, while the tooth 14 moves inside the groove G occupying it entirely in a transverse direction.

In this way, the powder flow F generated by the removal of the material from the panel P, and substantially opposite to the cutting direction X hits the deflecting element 10 itself, thus being deflected upwards by the latter.

The pushing action constantly exerted by the return spring 19 on the deflecting element 10, therefore, prevents the waste material flow F from the machining from passing between the deflecting element 10 and the panel P during machining.

At the end of the machining, following the detachment of the cutting blade 5 and the deflecting element 10 from the machined panel P, the deflecting system 8 returns to its rest position due to the return action exerted by the return spring 19.

As it is evident from the above description, a first advantage of the present invention is given by the possibility of having a machine tool equipped with an operating head to work, by removing material, a panel made of wood, plastic, ceramic, glass, fiberglass or metal, in which the same operating head comprises a deflecting element of the waste material from the machining, the position of which is predetermined and known at any time, or in both operating and rest conditions.

A further advantage of the invention is that of having a machine tool comprising an operating head, which is simple from the construction point of view and requires limited energy input for its operation.

In fact, the deflecting system 8 does not require the use of any energy source for its correct operation.

The present invention has been described for illustrative but not limitative purposes, according to its preferred embodiments, but it is to be understood that modifications and/or changes can be introduced by those skilled in the art within the scope of the invention as defined in the enclosed claims.

## Claims

1. Machine tool comprising an operative head (1) and operative means (4) which are connectable with said operative head (1) and configured to perform at least one chip-removal machining operation on a panel (P) or other workpiece, wherein said operative means (4) are relatively movable with respect to said panel (P) or other workpiece and comprise:
a rotative tool (5) to perform at least one chip-removal machining operation on said panel (P) or other workpiece; and
at least one deflecting element (10) for deflecting the chip material generated by said tool (5) during at least one chip-removal machining operation executed on said panel (P) or other workpiece, said at least one deflecting element (10) being connected with said tool (5) and configured to take a resting position, when said tool (5) is placed, in use, at a distance larger than a predetermined distance with respect to said panel (P) or other workpiece, and an operative position, where said at least one deflecting element (10) receives and deflects said chip material when said tool (5) operates on said panel (P) or other workpiece;
wherein said operative means (4) comprise elastic means (19) which are configured to keep said at least one deflecting element (10), in said resting position, stationary with respect to said tool (5) when said tool (5) is placed at a distance larger than a predetermined distance with respect to said panel (P) or other workpiece, and to keep said at least one deflecting element (10), in said operative position, in forced contact with said panel (P) or other workpiece when said tool (5) operates on said panel (P) or other workpiece, and
wherein said tool (5) comprises a circular cutting blade.

2. Machine tool according to claim 1, **characterized in that** said operative head (1) comprises a spindle (3), with which said operative means (4) are connectable in a removable way.

3. Machine tool according to any one of preceding claims, **characterized in that** said at least one deflecting element (10) comprises a tooth (14) which projects, in use, towards said panel (P) or other workpiece and has a thickness which is substantially equal to the thickness (d) of said tool (5), such that said tooth (14) is configured to be placed, in use, in a groove which is realized by said tool (5) in said panel (P) or other workpiece during said at least one chip-removal machining operation.

4. Machine tool according to any one of preceding claims, **characterized in that** said operative means (4) comprise connecting means (16) for connecting said at least one deflecting element (10) with said tool (5) such that said at least one deflecting element (10) is movable according to a curved trajectory with respect to said tool (5).

5. Machine tool according to claim 4, **characterized in that** said connecting means (16) comprise an articulated quadrilateral system, particularly an articulated parallelogram system.

6. Machine tool according to claim 5, **characterized in that** said elastic means (19) are connected with said articulated quadrilateral system.

7. Machine tool according to any one of preceding claims, **characterized in that** said elastic means (19) comprise at least one extension spring.

8. Machine tool according to any one of preceding claims, **characterized in that** said operative means (4) comprise at least one stop element (20) which is configured such as to determine said resting position of said at least one deflecting element (10).

9. Machine tool according to claim 8, **characterized in that** said at least one stop element (20) is adjustable such as to allow modifying the resting position of said at least one deflecting element (10).

10. Machine tool according to claim 9, **characterized in that** said connecting means (16) comprise a first articulated rod (17) and a second articulated rod (18) and **in that** said at least one stop element (20) is coupled to said first articulated rod (17) by a thread and faced to said second articulated rod (18).

11. Machine tool according to any one of preceding claims, **characterized in that** said operative means (4) comprise at least one smoothed element (15) placed between said tool (5) and said at least one deflecting element (10) such that said at least one smoothed element (15) goes, in use, into contact with said panel (P) or other workpiece before said at least one deflecting element (10) goes into contact with said panel (P) or other workpiece when a relative movement between said operative means (4) and said panel (P) or other workpiece according to a direction (X) is performed to execute a chip-removal machining operation on said panel (P) or other workpiece.

12. Machine tool according to any one of preceding claims, **characterized in that** said at least one deflecting element (10) comprises at least a first portion and at least a second portion which are such oriented as to form therebetween a predetermined angle and deflect, in use, respectively according to a first direction and a second direction different from said first direction, a chip material flow generated by said tool (5) during at least one chip-removal machining operation executed on said panel (P) or other workpiece.

13. Machine tool according to any one of preceding claims, **characterized in that** it comprises at least one sensor which is configured to detect a contact between said deflecting element (10) and said panel (P) or other workpiece when said deflecting element (10) is in said operative position.

## Patentansprüche

1. Werkzeugmaschine, die einen Arbeitskopf (1) und Arbeitsmittel (4) umfasst, die mit dem Arbeitskopf (1) verbunden werden können und so konfiguriert sind, dass sie mindestens einen spanabhebenden Bearbeitungsvorgang an einer Platte (P) oder einem anderen Werkstück durchführen, wobei die Arbeitsmittel (4) in Bezug auf die Platte (P) oder das andere Werkstück relativ beweglich sind und Folgendes umfassen: ein rotierendes Werkzeug (5) zur Durchführung mindestens eines spanabhebenden Bearbeitungsvorgangs an der Platte (P) oder einem anderen Werkstück; und mindestens ein Ablenkelement (10) zum Ablenken des von dem Werkzeug (5) erzeugten Spänematerials während mindestens eines an der Platte (P) oder einem anderen Werkstück ausgeführten spanabhebenden Bearbeitungsvorgangs, wobei das mindestens eine Ablenkelement (10) mit dem Werkzeug (5) verbunden ist und so konfiguriert ist, dass es eine Ruheposition einnimmt, wenn das Werkzeug (5) im Gebrauch in einem größeren als einem vorbestimmten Abstand in Bezug auf die Platte (P) oder ein anderes Werkstück angeordnet ist, und eine Betriebsposition einnimmt, in der das mindestens eine Ablenkelement (10) das Spanmaterial aufnimmt und ablenkt, wenn das Werkzeug (5) an der Platte (P) oder einem anderen Werkstück arbeitet; wobei die Betriebsmittel (4) elastische Mittel (19) umfassen, die so konfiguriert sind, dass sie das mindestens eine Ablenkelement (10) in der Ruheposition stationär in Bezug auf das Werkzeug (5) halten, wenn das Werkzeug (5) in einem Abstand angeordnet ist, der größer als ein vorbestimmter Abstand in Bezug auf die Platte (P) oder ein anderes Werkstück ist, und dass sie das mindestens eine Ablenkelement (10) in der Betriebsposition in Zwangskontakt mit der Platte (P) oder dem anderen Werkstück halten, wenn das Werkzeug (5) auf die Platte (P) oder das andere Werkstück einwirkt, und wobei das Werkzeug (5) ein kreisförmiges Schneidblatt umfasst.

2. Werkzeugmaschine nach Anspruch 1, **dadurch gekennzeichnet, dass** der Arbeitskopf (1) eine Spindel (3) umfasst, mit der die Arbeitsmittel (4) lösbar verbunden werden können.

3. Werkzeugmaschine nach einem der vorhergehenden Ansprüche, **dadurch gekennzeichnet, dass** das mindestens eine Ablenkelement (10) einen Zahn (14) umfasst, der im Gebrauch in Richtung der Platte (P) oder eines anderen Werkstücks vorsteht und eine Dicke aufweist, die im Wesentlichen gleich der Dicke (d) des Werkzeugs (5) ist, so dass der Zahn (14) so konfiguriert ist, dass er im Gebrauch in einer Nut platziert wird, die durch das Werkzeug (5) in der Platte (P) oder einem anderen Werkstück während des mindestens einen spanabhebenden Bearbeitungsvorgangs realisiert wird.

4. Werkzeugmaschine nach einem der vorhergehenden Ansprüche, **dadurch gekennzeichnet, dass** die Betriebsmittel (4) Verbindungsmittel (16) zum Verbinden des mindestens einen Ablenkelements (10) mit dem Werkzeug (5) umfassen, so dass das mindestens eine Ablenkelement (10) gemäß einer gekrümmten Bahn in Bezug auf das Werkzeug (5) beweglich ist.

5. Werkzeugmaschine nach Anspruch 4, **dadurch gekennzeichnet, dass** die Verbindungsmittel (16) ein gelenkiges Vierecksystem, insbesondere ein gelenkiges Parallelogrammsystem, umfassen.

6. Werkzeugmaschine nach Anspruch 5, **dadurch gekennzeichnet, dass** die elastischen Mittel (19) mit dem gelenkigen Vierecksystem verbunden sind.

7. Werkzeugmaschine nach einem der vorhergehenden Ansprüche, **dadurch gekennzeichnet, dass** die elastischen Mittel (19) mindestens eine Zugfeder umfassen.

8. Werkzeugmaschine nach einem der vorhergehenden Ansprüche, **dadurch gekennzeichnet, dass** die Betriebsmittel (4) mindestens ein Anschlagelement (20) umfassen, das so gestaltet ist, dass es die Ruheposition des mindestens einen Ablenkelements (10) bestimmt.

9. Werkzeugmaschine nach Anspruch 8, **dadurch gekennzeichnet, dass** das mindestens eine Anschlagelement (20) so einstellbar ist, dass die Ruheposition des mindestens einen Ablenkelements (10) verändert werden kann.

10. Werkzeugmaschine nach Anspruch 9, **dadurch gekennzeichnet, dass** die Verbindungsmittel (16) eine erste Gelenkstange (17) und eine zweite Gelenkstange (18) umfassen und dass das mindestens eine Anschlagelement (20) mit der ersten Gelenkstange (17) durch ein Gewinde gekoppelt ist und der zweiten Gelenkstange (18) gegenüberliegt.

11. Werkzeugmaschine nach einem der vorhergehenden Ansprüche, **dadurch gekennzeichnet, dass** die Betriebsmittel (4) mindestens ein geglättetes Element (15) umfassen, das zwischen dem Werkzeug (5) und dem mindestens einen Ablenkelement (10) angeordnet ist, so dass das mindestens eine geglättete Element (15) im Gebrauch, mit der Platte (P) oder einem anderen Werkstück in Kontakt kommt, bevor das mindestens eine Ablenkelement (10) mit der Platte (P) oder dem anderen Werkstück in Kontakt kommt, wenn eine Relativbewegung zwischen dem Betriebsmittel (4) und der Platte (P) oder dem anderen Werkstück gemäß einer Richtung (X) ausgeführt wird, um einen spanabhebenden Bearbeitungsvorgang an der Platte (P) oder dem anderen Werkstück auszuführen.

12. Werkzeugmaschine nach einem der vorhergehenden Ansprüche, **dadurch gekennzeichnet, dass** das mindestens eine Ablenkelement (10) mindestens einen ersten Abschnitt und mindestens einen zweiten Abschnitt umfasst, die so ausgerichtet sind, dass sie zwischen sich einen vorbestimmten Winkel bilden und im Gebrauch einen durch das Werkzeug (5) während mindestens eines an der Platte (P) oder einem anderen Werkstück ausgeführten spanabhebenden Bearbeitungsvorgangs erzeugten Spänematerialfluss jeweils gemäß einer ersten Richtung und einer von der ersten Richtung verschiedenen zweiten Richtung ablenken.

13. Werkzeugmaschine nach einem der vorhergehenden Ansprüche, **dadurch gekennzeichnet, dass** sie mindestens einen Sensor umfasst, der so konfiguriert ist, dass er einen Kontakt zwischen dem Ablenkelement (10) und der Platte (P) oder einem anderen Werkstück erfasst, wenn sich das Ablenkelement (10) in der Betriebsposition befindet.

## Revendications

1. Machine-outil comprenant une tête opérationnelle (1) et des moyens opérationnels (4) pouvant être reliés à ladite tête opérationnelle (1) et configurés pour effectuer au moins une opération d'usinage par enlèvement de copeaux sur un panneau (P) ou une autre pièce à usiner, dans laquelle lesdits moyens opérationnels (4) sont relativement mobiles par rapport audit panneau (P) ou à l'autre pièce à usiner et comprennent: un outil rotatif (5) pour effectuer au moins une opération d'usinage par enlèvement de copeaux sur ledit panneau (P) ou autre pièce; et au moins un élément déflecteur (10) pour dévier le matériau du copeau généré par ledit outil (5) au cours d'au moins une opération d'usinage par enlèvement de copeaux exécutée sur ledit panneau (P) ou autre pièce, ledit au moins un élément déflecteur (10) étant relié audit outil (5) et configuré pour prendre une position de repos, lorsque ledit outil (5) est placé, en utilisation, à une distance supérieure à une distance prédéterminée par rapport audit panneau (P) ou autre pièce, et une position opérationnelle, où ledit au moins un élément déflecteur (10) reçoit et dévie ledit matériau de copeau lorsque ledit outil (5) opère sur ledit panneau (P) ou autre pièce; dans lequel lesdits moyens opérationnels (4) comprennent des moyens élastiques (19) configurés pour maintenir ledit au moins un élément déflecteur (10), dans ladite position de repos, immobile par rapport audit outil (5) lorsque ledit outil (5) est placé à une distance supérieure à une distance prédéterminée par rapport audit panneau (P) ou à une autre pièce, et pour maintenir ledit au moins un élément déflecteur (10), dans ladite position opérationnelle, en contact forcé avec ledit panneau (P) ou une autre pièce lorsque ledit outil (5) opère sur ledit panneau (P) ou sur une autre pièce, et dans lequel Ledit outil (5) comprend une lame de coupe circulaire.

2. Machine-outil selon la revendication 1, **caractérisée par le fait que** la tête opérationnelle (1) comprend une broche (3), à laquelle les moyens opérationnels (4) peuvent être reliés de manière amovible.

3. Machine-outil selon l'une quelconque des revendications précédentes, **caractérisée en ce que** ledit au moins un élément déflecteur (10) comprend une dent (14) qui fait saillie, en utilisation, vers ledit panneau (P) ou autre pièce et présente une épaisseur sensiblement égale à l'épaisseur (d) dudit outil (5), de telle sorte que ladite dent (14) est configurée pour être placée, en utilisation, dans une rainure qui est réalisée par ledit outil (5) dans ledit panneau (P) ou autre pièce lors de ladite au moins une opération d'usinage par enlèvement de copeaux.

4. Machine-outil selon l'une quelconque des revendications précédentes, **caractérisée en ce que** lesdits moyens opérationnels (4) comprennent des moyens de liaison (16) pour relier ledit au moins un élément déflecteur (10) avec ledit outil (5) de sorte que ledit au moins un élément déflecteur (10) soit mobile selon une trajectoire courbe par rapport audit outil (5).

5. Machine-outil selon la revendication 4, **caractérisée par le fait que** lesdits moyens de liaison (16) comprennent un système de quadrilatères articulés, en particulier un système de parallélogrammes articulés.

6. Machine-outil selon la revendication 5, **caractérisée par le fait que** les moyens élastiques (19) sont reliés au système quadrilatéral articulé.

7. Machine-outil selon l'une quelconque des revendications précédentes, **caractérisée par le fait que** lesdits moyens élastiques (19) comprennent au moins un ressort d'extension.

8. Machine-outil selon l'une quelconque des revendications précédentes, **caractérisée en ce que** lesdits moyens opérationnels (4) comprennent au moins un élément de butée (20) qui est configuré de manière à déterminer ladite position de repos dudit au moins un élément déflecteur (10).

9. Machine-outil selon la revendication 8, **caractérisée par le fait que** ledit au moins un élément de butée (20) est réglable de manière à permettre de modifier la position de repos dudit au moins un élément déflecteur (10).

10. Machine-outil selon la revendication 9, **caractérisée par le fait que** lesdits moyens de connexion (16) comprennent une première tige articulée (17) et une deuxième tige articulée (18) et **par le fait que** ledit au moins un élément de butée (20) est couplé à ladite première tige articulée (17) par un filetage et fait face à ladite deuxième tige articulée (18).

11. Machine-outil selon l'une quelconque des revendications précédentes, **caractérisée en ce que** lesdits moyens opérationnels (4) comprennent au moins un élément lissé (15) placé entre ledit outil (5) et ledit au moins un élément déflecteur (10) de sorte que ledit au moins un élément lissé (15) entre, en utilisation, en contact avec ledit panneau (P) ou autre pièce avant que ledit au moins un élément déflecteur (10) n'entre en contact avec ledit panneau (P) ou autre pièce lorsqu'un mouvement relatif entre lesdits moyens opérationnels (4) et ledit panneau (P) ou autre pièce selon une direction (X) est effectué pour exécuter une opération d'usinage par enlèvement de copeaux sur ledit panneau (P) ou autre pièce.

12. Machine-outil selon l'une quelconque des revendications précédentes, **caractérisée en ce que** ledit au moins un élément déflecteur (10) comprend au moins une première portion et au moins une seconde portion qui sont orientées de manière à former entre elles un angle prédéterminé et à dévier, en utilisation, respectivement selon une première direction et une seconde direction différente de ladite première direction, un flux de matière en copeaux généré par ledit outil (5) lors d'au moins une opération d'usinage par enlèvement de copeaux exécutée sur ledit panneau (P) ou autre pièce à usiner.

13. Machine-outil selon l'une quelconque des revendications précédentes, **caractérisée en ce qu'**elle comprend au moins un capteur configuré pour détecter un contact entre ledit élément déflecteur (10) et ledit panneau (P) ou une autre pièce à usiner lorsque ledit élément déflecteur (10) est dans ladite position opérationnelle.
